# EUROPEAN PATENT APPLICATION

(11) **EP 3 628 394 A1**
(43) Date of publication of application: **01.04.2020**
(21) Application number: 17935742.1
(22) Date of filing: 28.12.2017
(51) Int. Cl.: B01D 53/26, B01D 46/46

(54) **TRAIN, AND DEVICE AND METHOD FOR PROCESSING COMPRESSED GAS THEREOF**

(30) Priority: 20.12.2017 CN 201711387396; 20.12.2017 CN 201721800116 U
(71) Applicant: CRRC Changchun Railway Vehicles Co., Ltd., Changchun, Jilin 130000 (CN)
(72) Inventor: QIAO, Feng, Jilin 130000 (CN); ZHAO, Yangkun, Jilin 130000 (CN); XIN, Zhiqiang, Jilin 130000 (CN); MA, Yongjing, Jilin 130000 (CN)
(74) Representative: Herrmann, Uwe
(86) International application number: PCT/CN2017/119272
(87) International publication number: WO 2019/119499

(57) **Abstract**

Disclosed is a device for processing the compressed gas of a train, comprising: external input ports (19) for receiving externally input compressed gas; a transmission pipeline (20) connected to the external input ports (19) and used for transmitting the compressed gas; a filtering unit (30) connected to the output end of the transmission pipeline (20) and used for filtering the impurities contained in the compressed gas; a drying unit (40) connected to the filtering unit (30) and used for reducing water content; and an internal output port (50) connected to the output end of the drying unit (40) and used for outputting the compressed gas of which the water rate is reduced to a preset ratio. A vehicle-mounted device can be fully used to process compressed gas, without externally providing a compressed gas processing device, thereby reducing test and operation and maintenance costs, and prolonging the service life of related components. Also disclosed is a processing method applied to the device for processing the compressed gas of a train. In addition, disclosed is a train.

## Description

The present application claims the priority to Chinese Patent Application No. 201711387396.X, titled "DEVICE AND METHOD FOR PROCESSING TRAIN COMPRESSED GAS", filed on December 20, 2017 with the Chinese patent office, and Chinese Patent Application No. 201721800116.9, titled "DEVICE FOR PROCESSING TRAIN COMPRESSED GAS AND TRAIN", filed on December 20, 2017 with the Chinese patent office, both of which are incorporated herein by reference in their entireties.

### FIELD

The present disclosure relates to the technical field of the use of a train compressed gas, and in particular to a train and a device and a method for processing a train compressed gas.

### BACKGROUND

With the continuous development in the field of motor trains and high-speed trains, there are more and more passengers to take the motor train and the high-speed train and the running shift of the train increases, since people pursue more convenient, faster, more comfortable and safer travel modes. Therefore, it is the direction of continuous research for those skilled in the art to improve the convenience and comfort as much as possible in a case that the safety of the high-speed train and the motor train is ensured.

The high-speed train or the motor train is provided with not only an electronic braking device, but also a backup pneumatic braking device. The pneumatic braking device uses a compressed gas with a certain air pressure. The train needs to be subjected to various tests before an official use. Usually when the train runs normally, the gas is compressed by an on-board air compressor. However, in consideration of other devices during the test, power supply to the air compressor is temporarily abnormal, that is, the air compressor cannot operate normally during the test.

In order to solve the above technical defects, in the conventional technology, a compressed gas with a certain gas pressure supplied from the external device is used, and the compressed gas is directly inputted to a certain gas transmission pipeline on the train. Generally, the gas quality of the inputted compressed gas does not meet the standard, thereby resulting in a bad effect on the gas transmission pipeline or components through which the gas passes, In addition, the cost for additionally adding a gas processing device is high.

Therefore, an urgent problem to be solved for those skilled in the art is how to provide a device for processing a train compressed gas that fully utilizes an on-board device to process the inputted compressed gas without additionally adding a gas processing device.

### SUMMARY

An object of the present disclosure is to provide a device for processing a train compressed gas. With the device for processing the train compressed gas, an external input port for a compressed gas is provided in a suitable position, the inputted compressed gas is processed by a filtering apparatus and a drying apparatus sequentially so that the processed compressed gas meets a preset gas quality requirement and has a moisture content as low as a preset ratio. Accordingly, the inputted compressed gas can be processed by fully utilizing an on-board device without additionally adding a device for processing a compressed gas, thereby reducing testing and operation and maintenance costs, and extending the service life of related components.

Another object of the present disclosure is to provide a method for processing a compressed gas applied to the above-described device for processing a train compressed gas.

Another object of the present disclosure is to provide a train provided with the above-described device for processing a train compressed gas.

To achieve the above object, a device for processing a train compressed gas is provided according to the present disclosure, which includes: external input ports, a gas transmission pipeline, a filtering apparatus, a drying apparatus and an internal output port. The external input ports are configured to receive an inputted compressed gas. The gas transmission pipeline is connected to the external input port and configured to transmit the compressed gas. The filtering apparatus is connected to an output end of the gas transmission pipeline and configured to filter off impurities contained in the compressed gas until a quality of the filtered compressed gas meets a preset gas quality requirement. The drying apparatus is connected to an output end of the filtering apparatus and configured to dry the compressed gas that meets the preset gas quality requirement until a moisture ratio of the dried compressed gas is reduced to a preset ratio. The internal output port is connected to an output end of the drying apparatus and configured to output the compressed gas of which the moisture ratio is reduced to the preset ratio.

In an embodiment, an input end of the external input port may be arranged to be obliquely upward and the external input port forms a preset inclination angle relative to a horizontal plane.

In an embodiment, an output end of the external input port may be rotationally connected to an input end of the gas transmission pipeline, and an input end of the external input port is rotatable to an obliquely downward position relative to the input end of the gas transmission pipeline.

In an embodiment, the filtering apparatus includes: a filter, a gas quality detector and a guide apparatus. The filter is connected to an output end of the gas transmission pipeline and configured to filter off impurities contained in the compressed gas. The gas quality detector is connected to an output end of the filter and configured to detect whether the quality of the filtered compressed gas meets the preset gas quality requirement and generate and send a guide signal based on a detection result. The guide apparatus is configured to connect to an input end of a filter return pipe or an input end of a drying transmission pipe based on the received guide signal, where an input end of the guide apparatus is connected to an output end of the gas quality detector, a first output end of the guide apparatus is connected to the input end of the filter return pipe, and a second output end of the guide apparatus is connected to the input end of the drying transmission pipe. The filter return pipe is connected to an input end of the filter and configured to transmit a compressed gas that does not meet the preset gas quality requirement. The drying transmission pipe is connected to an input end of the drying apparatus and configured to transmit a compressed gas that meets the preset gas quality requirement. There are two operation modes as follows. In a first operation mode, a guide signal instructing to guide the compressed gas that does not meet the preset gas quality requirement to the filter is received by the guide apparatus, the first output end is connected to the filter return pipe, and the second output end is disconnected from the drying transmission pipe. In a second operation mode, a guide signal instructing to guide the compressed gas that meets the preset gas quality requirement to the drying apparatus is received by the guide apparatus, the second output end is connected to the drying transmission pipe, and the first output end is disconnected from the filter return pipe.

In an embodiment, the external input port is arranged on a body surface of a predetermined compartment of the train.

In an embodiment, the number of the external input ports is two.

In an embodiment, the two external input ports are respectively arranged on the left side and the right side of the body surface.

To achieve the above object, a method for processing a train compressed gas is further provided according to the present disclosure, where the method is applied to the device for processing the train compressed gas described above and includes:
inputting a compressed gas with a preset gas pressure via the external input port, and transmitting the compressed gas to the filtering apparatus through the gas transmission pipeline, where the compressed gas is obtained by compression via an external air compressor;
filtering off impurities contained in the compressed gas by the filtering apparatus until the quality of the compressed gas meets the preset gas quality requirement, and transmitting the filtered compressed gas to the drying apparatus; and
drying the compressed gas that meets the preset gas quality requirement by the drying apparatus until a moisture ratio of the dried compressed gas is reduced to a preset ratio, and outputting the compressed gas of which the moisture ratio is reduced to the preset ratio via the internal output port.

In an embodiment, the process of filtering off the impurities contained in the compressed gas by the filtering apparatus until the quality of the compressed gas meets the preset gas quality requirement and transmitting the filtered compressed gas to a drying apparatus includes:
filtering off the impurities contained in the compressed gas transmitted by the filtering apparatus to obtain the filtered compressed gas;
detecting whether the gas quality of the filtered compressed gas meets the preset gas quality requirement;
filtering the compressed gas that does not meet the preset gas quality requirement by the filtering apparatus repeatedly until the compressed gas meets the preset gas quality requirement, if the gas quality of the filtered compressed gas does not meet the preset gas quality requirement; and
transmitting the compressed gas that meets the preset gas quality requirement to the drying apparatus, if the gas quality of the filtered compressed gas meets the preset gas quality requirement.

In an embodiment, the processing method further includes:
collecting an operation state parameter of the filtering apparatus according to a preset period;
determining whether the operation state parameter is in a normal parameter range; and
determining that the filtering apparatus is in an abnormal state and maintaining the filtering apparatus, if the operation state parameter is not in the normal parameter range.

To achieve the above object, a train is further provided according to the present disclosure, which includes a train body, a power consuming device, a power supplying device and a compressed gas processing system, where the compressed gas processing system is provided with the device for processing a train compressed gas described above.

A device for processing a train compressed gas according to the present disclosure includes an external input port, a gas transmission pipeline, a filtering apparatus, a drying apparatus, and an internal output port. The external input port is configured to receive an inputted compressed gas. The gas transmission pipeline is connected to the external input port and configured to transmit the compressed gas. The filtering apparatus is connected to an output end of the gas transmission pipeline, and configured to filter off the impurities contained in the compressed gas until the quality of the filtered compressed gas meets a preset gas quality requirement. The drying apparatus is connected to an output end of the filtering apparatus, and configured to dry the compressed gas that meets the preset gas quality requirement until a moisture ratio of the dried compressed gas is reduced to a preset ratio. The internal output port is connected to an output end of the drying apparatus, and configured to output the compressed gas of which the moisture ratio is reduced to the preset ratio.

Apparently, in the technical solution according to the present disclosure, an external input port for the compressed gas is arranged in a suitable position, the inputted compressed gas is processed by the filtering apparatus and the drying apparatus sequentially so that the processed compressed gas meets the preset gas quality requirement and has a moisture content as low as the preset ratio. Accordingly, the inputted compressed gas can be processed by fully utilizing an on-board device without additionally adding a device for processing a compressed gas, thereby reducing testing and operation and maintenance costs, and extending the service life of related components. A processing method applied to the above-mentioned device for processing the train compressed gas is further provided according to the present disclosure, and has the above beneficial effects which are not repeated here.

### BRIEF DESCRIPTION OF THE DRAWINGS

In order to illustrate technical solutions in embodiments of the present disclosure or the conventional technology more clearly, drawings to be used in the description of the embodiments or the conventional technology are briefly described below. Apparently, the drawings described below only illustrate some embodiments of the present disclosure, and other drawings may be obtained by those skilled in the art according to the provided drawings without any creative work.
Figure 1 is a schematic diagram showing an arrangement of a device for processing a train compressed gas according to an embodiment of the present disclosure;
Figure 2 is a schematic diagram showing an arrangement of an external input port according to an embodiment of the present disclosure;
Figure 3 is a schematic diagram showing an arrangement of another external input port according to an embodiment of the present disclosure;
Figure 4 is a schematic diagram showing a structure of a filtering apparatus according to an embodiment of the present disclosure;
Figure 5 is a flowchart showing a method for processing a train compressed gas according to an embodiment of the present disclosure;
Figure 6 is a flowchart showing another method for processing a train compressed gas according to an embodiment of the present disclosure;
Figure 7 is a flowchart showing still another method for processing a train compressed gas according to an embodiment of the present disclosure; and
Figure 8 is a schematic circuit diagram of a device for processing a train compressed gas according to an embodiment of the present disclosure.

In the drawings:

| | |
|---|---|
| 10. External input port | 20. Gas transmission pipeline |
| 30. Filtering apparatus | 40. Drying apparatus |
| 50. Internal output port | 31. Filter |
| 32. Gas quality detecting apparatus | 33. Guide apparatus |
| 34. Filter return pipe | 35. Drying transmission pipe |
| 331. First output end | 332. Second output end |

### DETAILED DESCRIPTION OF THE EMBODIMENTS

The core of the present disclosure is to provide a device and a method for processing a train compressed gas. An external input port for a compressed gas is arranged in a suitable position, the inputted compressed gas is processed by the filtering apparatus and the drying apparatus sequentially so that the processed compressed gas meets the preset gas quality requirement and has a moisture content as low as the preset ratio. Accordingly, the inputted compressed gas can be processed by fully utilizing an on-board device without additionally adding a device for processing a compressed gas, thereby reducing testing and operation and maintenance costs, and extending a service life of related components.

To make the object, technical solutions and advantages of the embodiments of the present disclosure clearer, the technical solutions according to the embodiments of the present disclosure will be described clearly and completely as follows in conjunction with the drawings in the embodiments of the present disclosure. It is apparent that the described embodiments are only a part rather than all of the embodiments according to the present disclosure. Any other embodiments obtained by those skilled in the art based on the embodiments in the present disclosure without any creative efforts fall within the protection scope of the present disclosure.

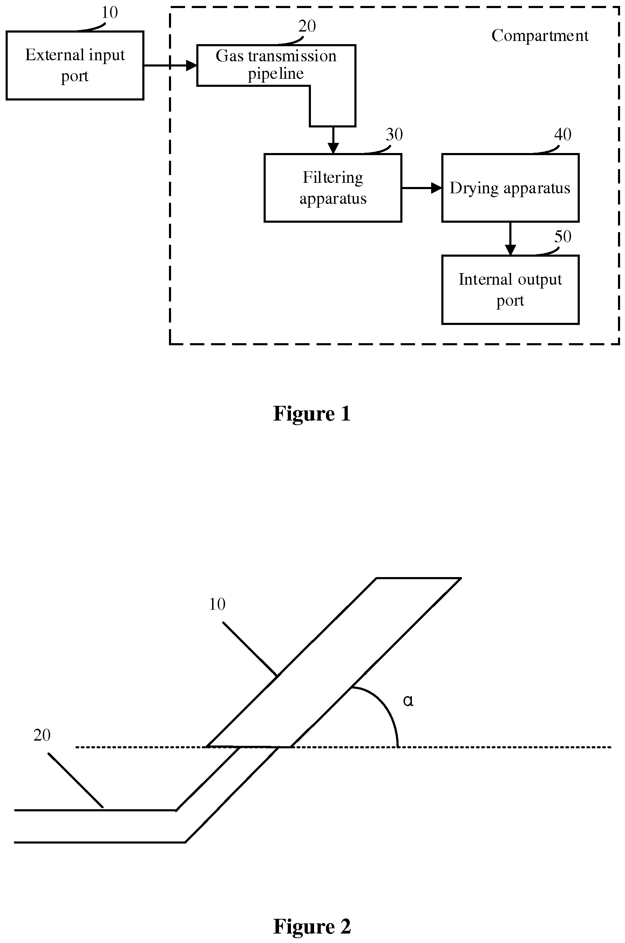

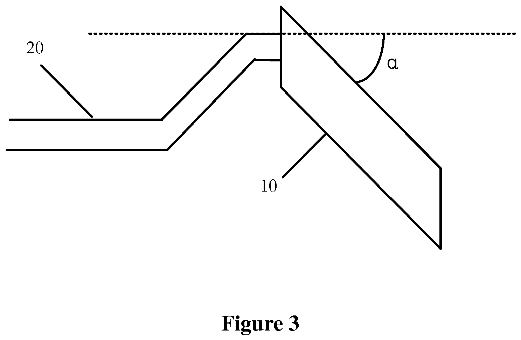

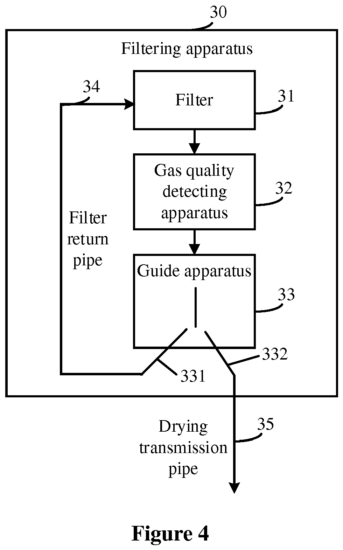

In conjunction with Figure 1 to Figure 4, specific implementations of a device for processing a train compressed gas according to embodiments of the present disclosure are described in detail below. Figure 1 is a schematic diagram showing an arrangement of a device for processing a train compressed gas according to an embodiment of the present disclosure; Figure 2 is a schematic diagram showing an arrangement of an external input port according to an embodiment of the present disclosure; Figure 3 is a schematic diagram showing an arrangement of another external input port according to an embodiment of the present disclosure; and Figure 4 is a schematic diagram showing a structure of a filtering apparatus according to an embodiment of the present disclosure.

The device for processing a train compressed gas includes an external input port 10, a gas transmission pipeline 20, a filtering apparatus 30, a drying apparatus 40 and an internal output port 50.

The external input port 10 is configured to receive an inputted compressed gas.

In the present disclosure, the external input port 10 is configured to receive the compressed gas with a certain gas pressure obtained by performing a gas compressing operation outside of the train. During the test of the train, an-board air compressor cannot be enabled to perform the gas compressing operation in the train (due to under voltage), but it is required to test the compressed gas in the train. Therefore, the compression operation is generally completed by an external air compressor. However, the compressed gas obtained by only performing the compressing operation does not meet a requirement for a normal usage of the train. In a case that a gas processing device is added in a testing environment, testing and operation and maintenance costs are significantly increased.

Therefore, with the external input port 10 arranged in a suitable position according to the present disclosure, that is, the external input port 10 is located in front of an on-board gas processing device, the inherent hardware performance of the on-board gas processing device can be fully utilized, since the train is provided with an on-board gas processing device anyway. Moreover, an input port for the gas transmission pipeline 20 cannot be arranged in an arbitrary position on the train, since the compressed air failing to meet the quality requirement cannot be used well and may damage other components before the compressed air is processed by the gas processing device.

For example, the compressed gas may carry small solid particles and other impurities, and a moisture content of the compressed gas is uncertain. In addition, the gas with a high moisture content tends to rust the non-corrosion resistant components. Therefore, the performance of the components is degraded or even the components are damaged.

In an embodiment, the external input port 10 may be arranged on a body surface of a predetermined compartment of a train, so that the gas is inputted via the external input port 10 during testing. In a common eight-compartment train, only one compressed gas processing device is to be provided. A compartment where the device is arranged may be flexibly selected according to the actual situations.

Alternatively, multiple external input ports 10 may be provided. For example, one external input port is provided on each of the left and right sides of the body surface of the compartment, or multiple external input ports may be provided on one side of the body surface of the compartment. Whether more external input port 10 being provided may be flexibly determined and selected according to the actual situations in conjunction with the special requirements.

In an embodiment, an input end of the external input port 10 may be arranged to face obliquely upward and form a preset inclination angle with respect to a horizontal plane. That is, an orientation of the external input port 10 may be as shown in Figure 2, that is, the external input port 10 forms an inclination angle α with respect to a surface of the body shell parallel to the horizontal plane, or may be perpendicular or parallel to the surface of the body shell. The solution of forming an inclination angle is different from the solution of being perpendicular or parallel to the surface of the body shell. The advantage of the solution of forming the inclination angle is that the external input port does not extend beyond the top of the compartment too much, and the external input port does not extend beyond the side of the compartment too much.

In consider of that the external input port is arranged on the surface of the body shell and the train may drive under a variety of weather conditions, in the solution as shown in Figure 2, rainwater is easy to enter the external input port 10 in rainy and snowy weather, and enters the gas transmission pipeline 20 with the movement of the train. It is dangerous in this case. Therefore, an output end of the external input port 10 may be arranged to be rotationally connected to an input end of the gas transmission pipeline 20, that is, the input end of the external input port 10 can be rotated to an obliquely downward position relative to the input end of the gas transmission pipeline 20. That is, the external input port 10 may be gradually rotated from the orientation shown in Figure 2 to the orientation shown in Figure 3, i.e., changing from the orientation of obliquely upward to the orientation of obliquely downward, thereby avoiding the problem that the rainwater is easy to enter the external input port.

The gas transmission pipeline 20 is connected to the external input port 10 and configured to transmit the compressed gas.

The gas transmission pipeline 20 is mainly configured to transmit the compressed gas entering via the external input port 10 to the on-board compressed gas processing device. Moreover, the gas transmission pipeline 20 also functions as a buffer apparatus to prevent dangerous substances from entering the external input port under special circumstances. Further, a series of sensors and valves may be further provided on the gas transmission pipeline 20. The sensor may be an air pressure sensor for measuring an air pressure of the inputted compressed air, etc. The valve may function as a security apparatus that is manually controlled to be open or closed. The damage may be reduced by using the valve in a case that a portion of the gas transmission pipeline 20 suddenly breaks. These apparatuses may be flexibly added, which are not limited herein.

The filtering apparatus 30 is connected to an output end of the gas transmission pipeline 20, and configured to filter off impurities contained in the compressed gas until a quality of the filtered compressed gas meets a preset gas quality requirement.

In order to achieve a function of the filtering apparatus 30, as shown in Figure 4, the filtering apparatus 30 may include a filter 31, a gas quality detector 32, a guide apparatus 33, a filter return pipe 34 and a drying transmission pipe 35 in an embodiment.

The filter 31 is connected to an output end of the gas transmission pipeline 20, and configured to filter off the impurities contained in the compressed gas.

The gas quality detector 32 is connected to an output end of the filter 31, and configured to detect whether the quality of the filtered compressed gas meets the preset gas quality requirement and generate and send a guide signal based on a detection result.

The guide apparatus 33 is configured to connect to an input end of a filter return pipe 34 or an input end of a drying transmission pipe 35 based on the received guide signal. An input end of the guide apparatus 33 is connected to an output end of the gas quality detector 32, a first output end 331 of the guide apparatus 33 is connected to the input end of the filter return pipe 34, and a second output end 332 of the guide apparatus 33 is connected to the input end of the drying transmission pipe 35.

The filter return pipe 34 is connected to an input end of the filter 31, and configured to transmit a compressed gas that does not meet the preset gas quality requirement.

The drying transmission pipe 35 is connected to an input end of the drying apparatus 40, and configured to transmit a compressed gas that meets the preset gas quality requirement.

There are two operation modes as follows.

In a first operation mode, a guide signal instructing to guide the compressed gas that does not meet the preset gas quality requirement to the filter 31 is received by the guide apparatus 33, the first output end 331 is connected to the filter return pipe 34, and the second output end 332 is disconnected from the drying transmission pipe 35.

In a second operation mode, a guide signal instructing to guide the compressed gas that meets the preset gas quality requirement to the drying apparatus 40 is received by the guide apparatus 33, the second output end 332 is connected to the drying transmission pipe 35, and the first output end 331 is disconnected from the filter return pipe 34.

That is to say, two pipelines are selectively connected with the guide apparatus shown in Figure 4, and the compressed gas that does not meet the preset gas quality requirement is transmitted back to the filter 31 and the compressed gas that meets the preset gas quality requirement is transmitted to the drying apparatus 40, thereby achieving the filtering function of the filter and obtaining the compressed gas that meets the preset gas quality requirement.

The drying apparatus 40 is connected to the filtering apparatus 30, and configured to dry the compressed gas that meets the preset gas quality requirement until a moisture ratio of the dried compressed gas is reduced to a preset ratio.

The function of the drying apparatus 40 is substantially the same as that of the filtering apparatus 30. The difference is that, the function of the filtering apparatus 30 is to filter off the impurities to cause the compressed gas to meet the preset gas quality requirement, while the function of the drying apparatus 40 is to reduce the moisture contained in the compressed gas that meets the preset gas quality requirement to the preset ratio, to prevent damaging other components through which the compressed gas flows.

Accordingly, an apparatus that is substantially identical to the filter apparatus 30 may be used, that is, an apparatus such as a dryer, a moisture content detector, a guide device, a dryer return pipe, an internal output port transmission pipe, is selected and used. It is not limited to select and use what type of components in a case of achieving the same object, and the components may be selected flexibly according to the actual situation to achieve the function with the most suitable components.

Further, in this embodiment, only the case that the filtering apparatus 30 and the drying apparatus 40 are provided is briefly described. Certain gas processing devices may be added or removed in the trains having different types or in different driving environments. The connection manner with other components is not limited, and the connection manners without any creative work should fall within the scope of protection of the present disclosure.

The internal output port 50 is connected to the drying apparatus 40, and configured to output the compressed gas of which the moisture ratio is reduced to the preset ratio.

Further, the device for processing a train compressed gas may further include:
a train execution mechanism, connected to the internal output port 50 and configured to execute various train braking operations by using the outputted compressed gas.

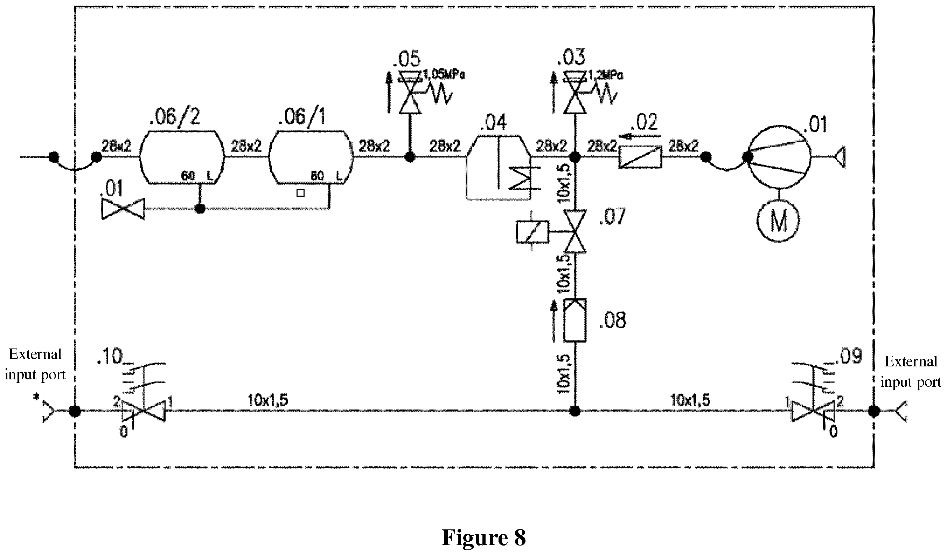

The above functional apparatuses are applied to the actual train, to obtain a gas path diagram as shown in Figure 8. The gas path diagram illustrates a device for processing a train compressed gas including the above-mentioned functional apparatuses.

Two external input ports are shown on both sides of Figure 8, which are configured to supply compressed air to the train by connecting with an external compressed gas source when the train is parked in a garage or a parking lot..09 and .10 indicate two ball valves that are generally turned off in a case of not needing to use an external air source and are turned on in a case of needing to use the external air source..04 indicates a double-tower dryer for on-board use on the train, and .08 indicates an on-board filter. Other reference numbers indicate types and parameters of auxiliary devices, which are not described here.

The present disclosure aims to receive only the external air source with an air pressure reaching the standard by using the external input port provided near the on-board compressed gas processing device, so that the on-board compressed gas processing device can be fully utilized and the quality of the compressed gas entering the train is ensured, thereby effectively avoiding that internal components of the train are polluted by the external air source, without additionally providing a high-cost compressed gas processing device.

Based on the above-described technical solution, with the device for processing a train compressed gas according to the embodiments of the present disclosure, an external input port for a compressed gas is provided in a suitable position, the inputted compressed gas is processed by the filtering apparatus and the drying apparatus sequentially so that the processed compressed gas meets a preset gas quality requirement and has a moisture content as low as a preset ratio. Accordingly, the inputted compressed gas can be processed by fully utilizing an on-board device without additionally adding a device for processing a compressed gas, thereby reducing testing and operation and maintenance costs, and extending the service life of related components.

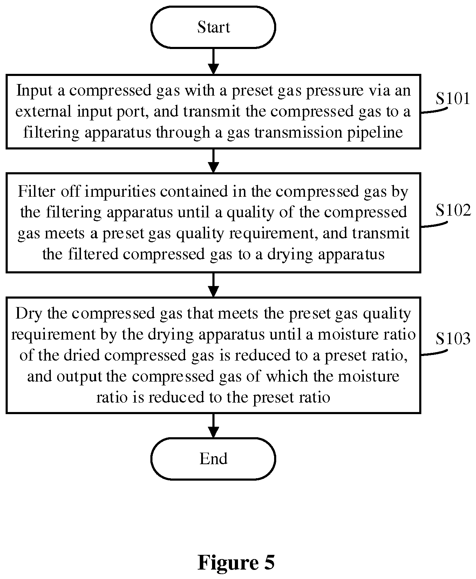

Reference is made to Figure 5, which is a flowchart showing a method for processing a train compressed gas according to an embodiment of the present disclosure.

In order to achieve the above object, a method for processing a train compressed gas is further provided according to the present disclosure, and is applied to the device for processing a train compressed gas as described in the above embodiment. The method includes steps S101 to S103.

In step S101, a compressed gas with a preset gas pressure is inputted via an external input port 10, and the compressed gas is transmitted to a filtering apparatus 30 through a gas transmission pipeline 20. The compressed gas is obtained by compression via an external air compressor.

In S102, impurities contained in the compressed gas are filtered off by the filtering apparatus 30 until a quality of the compressed gas meets a preset gas quality requirement, and the filtered compressed gas is transmitted to a drying apparatus 40.

In step S103, the compressed gas that meets the preset gas quality requirement is dried by the drying apparatus 40 until a moisture ratio of the dried compressed gas is reduced to a preset ratio, and the compressed gas of which the moisture ratio is reduced to the preset ratio is outputted via the internal output port 50.

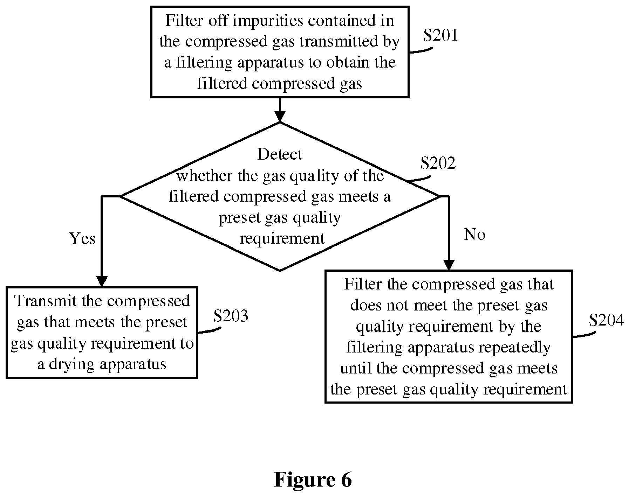

Reference is made to Figure 6, which is a flowchart showing another method for processing a train compressed gas according to an embodiment of the present disclosure.

In the embodiment of the present disclosure, the process of outputting the compressed gas that meets the preset gas quality requirement in S102 in the previous embodiment is described in detail. The other steps are substantially the same as those in the previous embodiment, and may be seen in the related content in the previous embodiment, which are not described here.

In step S201, the impurities contained in the transmitted compressed gas are filtered off by the filtering apparatus 30 to obtain the filtered compressed gas.

In step S202, it is detected whether the gas quality of the filtered compressed gas meets the preset gas quality requirement.

In step 203, the compressed gas that meets the preset gas quality requirement is transmitted to the drying apparatus 40.

In step S204, the compressed gas that does not meet the preset gas quality requirement is filtered by the filtering apparatus 30 repeatedly until the compressed gas meets the preset gas quality requirement.

An implementation of this embodiment may be seen in Figure 4. By means of the filtering apparatus 30, the filtered compressed gas meets the preset gas quality requirement. For the specific content, one may refer to the description of the filtering apparatus 30 in the above embodiment, which is not described here. Apparently, this embodiment may also be implemented in other ways, which are not limited herein.

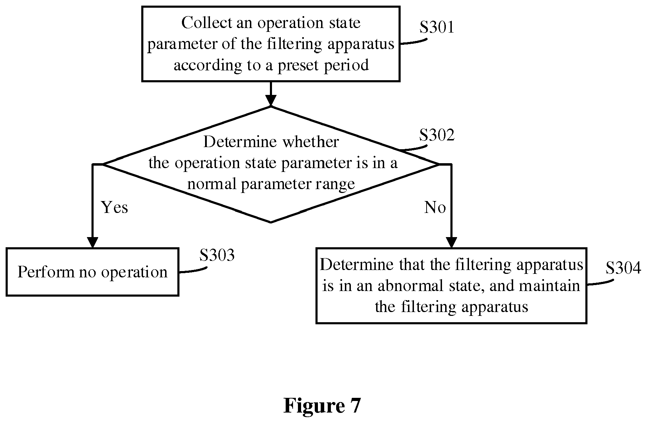

Reference is made to Figure 7, which is a flowchart showing still another method for processing a train compressed gas according to an embodiment of the present disclosure.

In the embodiment on the basis of other embodiments, how to maintain the filtering apparatus 30 is described in detail, so as to troubleshoot as far as possible before a fault occurs. Other steps are substantially the same as that of the previous embodiment, and reference may be made to the related content in the previous embodiment, which is not described herein.

In step S301, an operation state parameter of the filtering apparatus 30 is collected according to a preset period.

In step S302, it is determined whether the operation state parameter is in a normal parameter range.

In step S303, no operation is performed.

In a case that it is determined in step S302 that the operation state parameter is in the normal parameter range, no operation may be performed in step S303.

In step S304, it is determined that the filtering apparatus 30 is in an abnormal state, and the filtering apparatus 30 is maintained.

In a case that it is determined in step S302 that the operation state parameter is not in the normal parameter range, it is determined that the filtering apparatus 30 is in the abnormal state and the filtering apparatus 30 is maintained in step S304.

This embodiment aims to collect various operating parameters of the filtering apparatus, and compare the collected operating parameters with the normal range of the operating parameters. If the operating parameters are not in the normal range, it is determined that a failure may occur in some parts of the filtering apparatus. Therefore, the filtering apparatus should be maintained or replaced in advance before a major failure occurs.

Similarly, the operating state of the drying apparatus 40 may also be determined by using the same method, and the drying apparatus 40 may be maintained according to the determined result, which is not described herein.

The embodiments of the present disclosure are described herein in a progressive manner, with an emphasis placed on explaining the difference between each embodiment and the other embodiments. Hence, for the same or similar parts among the embodiments, one may refer to the description of other embodiments. For the apparatus disclosed in the embodiments, the corresponding descriptions are relatively simple because the apparatus correspond to the methods disclosed in the embodiments. For the relevant portions, one may refer to the description of the method parts.

It should be further appreciated by those skilled in the art that, the units and algorithm steps in the examples described according to the embodiments disclosed herein can be implemented by electronic hardware, computer software or the combination thereof. To illustrate the interchangeability of the hardware and the software clearly, the components and the steps in the examples are described generally according to functions in the above description. Whether the functions being implemented by hardware or software depends on specific applications and design constraints for the technical solution. For each specific application, different methods may be used by those skilled in the art to implement the described function, and such implementation should not be considered to depart from the scope of the present disclosure.

The principles and implementations of the present disclosure are clarified using specific embodiments herein. The above description of the embodiments is only intended to assist understanding the method and the key concept of the present disclosure. It should be noted that, for those skilled in the art, improvements and modifications may also be made to the present disclosure without departing from the principle of the disclosure. Those improvements and modifications should also be included in the scope of protection of claims of the disclosure.

It should further be noted that the relationship terminologies such as "first", "second" and the like are only used herein to distinguish one entity or operation from another, rather than to necessitate or imply that an actual relationship or order exists between the entities or operations. Furthermore, the terms such as "include", "comprise" or any other variants thereof means to be non-exclusive. Therefore, the process, method, article or device including a series of elements includes not only the disclosed elements but also other elements that are not clearly enumerated, or further includes inherent elements of the process, method, article or device. Unless expressively limited, the statement "including a..." does not exclude the case that other similar elements may exist in the process, method, article or device other than the enumerated elements.

## Claims

1. A device for processing a train compressed gas, comprising:
external input ports (10), configured to receive an inputted compressed gas;
a gas transmission pipeline (20), connected to the external input port (10) and configured to transmit the compressed gas;
a filtering apparatus (30), connected to an output end of the gas transmission pipeline (20) and configured to filter off impurities contained in the compressed gas until a quality of the filtered compressed gas meets a preset gas quality requirement;
a drying apparatus (40), connected to an output end of the filtering apparatus (30) and configured to dry the compressed gas that meets the preset gas quality requirement until a moisture ratio of the dried compressed gas is reduced to a preset ratio; and
an internal output port (50), connected to an output end of the drying apparatus (40) and configured to output the compressed gas of which the moisture ratio is reduced to the preset ratio.

2. The device for processing a train compressed gas according to claim 1, wherein an input end of the external input port (10) is arranged to be obliquely upward and the external input port (10) forms a preset inclination angle relative to a horizontal plane.

3. The device for processing a train compressed gas according to claim 2, wherein an output end of the external input port (10) is rotatably connected to an input end of the gas transmission pipeline (20), and an input end of the external input port (10) is rotatable to an obliquely downward position relative to the input end of the gas transmission pipeline (20).

4. The device for processing a train compressed gas according to claim 3, wherein the filtering apparatus comprises:
a filter (31), connected to the output end of the gas transmission pipeline (20) and configured to filter off impurities contained in the compressed gas;
a gas quality detector (32), connected to an output end of the filter (31) and configured to detect whether the quality of the filtered compressed gas meets the preset gas quality requirement and generate and send a guide signal based on a detection result;
a guide apparatus (33), configured to connect to an input end of a filter return pipe (34) or an input end of a drying transmission pipe (35) based on the received guide signal, wherein an input end of the guide apparatus (33) is connected to an output end of the gas quality detector (32), a first output end (331) of the guide apparatus (33) is connected to the input end of the filter return pipe (34), and a second output end (332) of the guide apparatus (33) is connected to the input end of the drying transmission pipe (35);
the filter return pipe (34), connected to an input end of the filter (31) and configured to transmit a compressed gas that does not meet the preset gas quality requirement; and
the drying transmission pipe (35), connected to an input end of the drying apparatus (40) and configured to transmit a compressed gas that meets the preset gas quality requirement,
wherein there are two operation modes:
in a first operation mode, a guide signal instructing to guide the compressed gas that does not meet the preset gas quality requirement to the filter (31) is received by the guide apparatus (33), the first output end (331) is connected to the filter return pipe (34), and the second output end (332) is disconnected from the drying transmission pipe (35); and
in a second operation mode, a guide signal instructing to guide the compressed gas that meets the preset gas quality requirement to the drying apparatus (40) is received by the guide apparatus (33), the second output end (332) is connected to the drying transmission pipe (35), and the first output end (331) is disconnected from the filter return pipe (34).

5. The device for processing a train compressed gas according to any one of claims 1 to 4, wherein the external input port (10) is arranged on a body surface of a predetermined compartment of the train.

6. The device for processing a train compressed gas according to claim 5, wherein the number of the external input ports (10) is two.

7. The device for processing a train compressed gas according to claim 6, wherein the two external input ports (10) are respectively arranged on the left side and the right side of the body surface.

8. A method for processing a train compressed gas, applied to the device for processing a train compressed gas according to any one of claims 1 to 7, comprising:
inputting a compressed gas with a preset gas pressure via the external input port (10), and transmitting the compressed gas to the filtering apparatus (30) through the gas transmission pipeline (20), wherein the compressed gas is obtained by compression via an external air compressor;
filtering off impurities contained in the compressed gas by the filtering apparatus (30) until the quality of the compressed gas meets the preset gas quality requirement, and transmitting the filtered compressed gas to the drying apparatus (40); and
drying the compressed gas that meets the preset gas quality requirement by the drying apparatus (40) until a moisture ratio of the dried compressed gas is reduced to a preset ratio, and outputting the compressed gas of which the moisture ratio is reduced to the preset ratio via the internal output port (50).

9. The processing method according to claim 8, wherein the filtering off the impurities contained in the compressed gas by the filtering apparatus until the quality of the compressed gas meets the preset gas quality requirement and transmitting the filtered compressed gas to a drying apparatus comprises:
filtering off the impurities contained in the compressed gas transmitted by the filtering apparatus to obtain the filtered compressed gas;
detecting whether a gas quality of the filtered compressed gas meets the preset gas quality requirement;
filtering the compressed gas that does not meet the preset gas quality requirement by the filtering apparatus repeatedly until the compressed gas meets the preset gas quality requirement, if the gas quality of the filtered compressed gas does not meet the preset gas quality requirement; and
transmitting the compressed gas that meets the preset gas quality requirement to the drying apparatus, if the gas quality of the filtered compressed gas meets the preset gas quality requirement.

10. The processing method according to claim 9, further comprising:
collecting an operation state parameter of the filtering apparatus according to a preset period;
determining whether the operation state parameter is in a normal parameter range; and
determining that the filtering apparatus is in an abnormal state and maintaining the filtering apparatus, if the operation state parameter is not in the normal parameter range.

11. A train, comprising a train body, a power consuming device, a power supplying device and a compressed gas processing system, wherein the compressed gas processing system is provided with the device for processing a train compressed gas according to any one of claims 1 to 7.
